# EUROPÄISCHE PATENTANMELDUNG

(11) **EP 1 505 305 A1**
(43) Veröffentlichungstag der Anmeldung: **09.02.2005**
(21) Anmeldenummer: 04015839.6
(22) Anmeldetag: 06.07.2004
(51) Int. Cl.: F16C 19/34

(54) **Wälzlager**

(30) Priorität: 02.08.2003 DE 10335415
(71) Anmelder: AB SKF, S-415 50 Göteborg (SE)
(72) Erfinder: Neder, Günter, 97422 Schweinfurt (DE); Heemskerk, Rut, 97490 Poppenhausen-Kützberg (DE); Schemmel, Bruno, 97505 Geldersheim (DE); Reichert, Jürgen, 97499 Donnerdorf (DE); Grüll, Robert, 97528 Sulzdorf a. d. Lederhecke (DE); Beck, Burkard, 97294 Unterpleichfeld (DE); Schwappach, Alfred, 97494 Bundorf (DE); Wagner, Stefan, 97421 Schweinfurt (DE)
(74) Vertreter: Kohl, Thomas

(57) **Zusammenfassung**

Die Erfindung betrifft ein Wälzlager (1) mit einem Außenring (2), einem Innenring (3) und zwischen diesen angeordneten Wälzkörpern (4), wobei die Wälzkörper (4) durch einen Käfig (5) auf Abstand gehalten werden und wobei der Käfig (5) aus einer Anzahl einzelner Käfigsegmente (6, 6', 6", 6"') gebildet wird. Zur Verbesserung des Laufverhaltens des Wälzlagers (1) ist vorgesehen, dass es als Kreuzkegelrollenlager ausgebildet ist, wobei jedes Käfigsegment (6, 6', 6", 6''') zwei gegenüberliegende Führungsabschnitte (7, 8) für eine Kegelrolle (4') aufweist, die diese zumindest teilweise beidseitig umfassen und wobei das Käfigsegment (6') für die an die beidseitig umfasste Kegelrolle (4') angrenzenden Kegelrollen (4", 4''') jeweils einen Führungsabschnitt (9, 10) aufweist, der im Zusammenwirken mit einem entsprechenden Führungsabschnitt (11, 12), der an das Käfigsegment (6') angrenzenden Käfigsegmente (6", 6''') die angrenzenden Kegelrollen (4", 4''') zumindest teilweise beidseitig umfassen.

## Beschreibung

Die Erfindung betrifft ein Wälzlager mit einem Außenring, einem Innenring und zwischen diesen angeordneten Wälzkörpem, wobei die Wälzkörper durch einen Käfig auf Abstand gehalten werden und wobei der Käfig aus einer Anzahl einzelner Käfigsegmente gebildet wird.

Wälzlager dieser Art, bei denen aus Segmenten zusammengesetzte Käfige zum Einsatz kommen, sind im Stand der Technik bekannt. Aus der **DE-PS 859 699** ist ein Kreuzzylinderrollenlager bekannt, also ein Lager, bei dem zwei aufeinanderfolgende Zylinderrollen jeweils um 90° zueinander verdreht sind. Der Käfig besteht hier aus einzelnen Segmenten, die miteinander verbunden sind und die gesamte Käfigstruktur bilden.

Die **DE 37 09 039 C2** offenbart einen Käfig für Längsbewegungen, bei dem hintereinander angeordnete einzelne Käfigsegmente vorgesehen sind.

Für spezielle Lageraufgaben, z.B. im Schwermaschinenbau, werden Kreuzkegelrollenlager benötigt. Bei diesen sind zwei in Umfangsrichtung des Lagers aufeinanderfolgende Kegelrollen jeweils um 90° verdreht angeordnet.

Hierbei hat es sich als problematisch erwiesen, den Käfig so auszubilden, dass die einzelnen Kegelrollen im gewünschten Abstand zueinander gehalten werden und auch dann, wenn sie gerade keine Last übertragen müssen, in ihrer Anlaufposition gehalten werden. Der Durchmesser der Kegelrollen ist bei dieser Art von Lagern immer größer als die Länge der Kegelrolle. Das bedeutet, dass die Kegelrollen bei einem mit Lagerluft versehenen Lager, aber auch bei einem vorgespannten Lager, bei dem die Verformung unter Belastung größer ist als die Vorspannung, unter Belastung Luft haben. Diese Kegelrollen fallen dann durch ihr Eigengewicht bis zur Anlage an der jeweiligen Laufbahn herunter. Bei erneuter Belastung müssen diese Rollen erst wieder zu ihrem Anlaufbord am Ring gelangen, was erst nach einigen Umdrehungen des Lagers erfolgt. Dies bedeutet, dass die Kegelrollen kurzzeitig ungleichmäßig belastet werden, was schnell zu einer Überlastung des Lagers führen kann.

Die Erhöhung der Vorspannung des Lagers zur Verhinderung des genannten Effekts ist keine Lösung, da stark vorgespannte Lager erhöhte Reibung aufweisen und sich folglich schneller erwärmen. Hierdurch wird die Gebrauchsdauer des Lagers herabgesetzt. Entsprechend stark vorgespannte Kreuzkegelrollenlager werden daher zumeist nur für Schwenkbewegungen eingesetzt.

Der Erfindung liegt daher die **Aufgabe** zugrunde, ein Wälzlager der eingangs genannten Art zu schaffen, dass die genannten Nachteile verhindert. Es soll namentlich eine solche Ausbildung erreicht werden können, dass bei Realisierung des Lagers als Kreuzkegelrollenlager die Kegelrollen, auch ohne Vorsehen einer hohen Vorspannung des Lagers, stets in ihrer idealen Anlaufposition gehalten werden. Es soll dabei verhindert werden, dass unbelastete Rollen aus ihrer Anlaufposition herausfallen können. Das vorgeschlagene Lager soll somit mit Lagerluft ausführbar sein, wobei hohe Lagerdrehzahlen ermöglicht werden sollen. Weiterhin soll eine einfache Montage des Lagers gewährleistet sein. Durch Erreichen einer gleichmäßigen Lastaufnahme, auch bei wechselseitiger Belastung, soll schließlich die Gebrauchsdauer des Lagers groß gehalten werden.

Die **Lösung** dieser Aufgabe durch die Erfindung ist dadurch gekennzeichnet, dass das Wälzlager als Kreuzkegelrollenlager ausgebildet ist, wobei jedes Käfigsegment zwei gegenüberliegende Führungsabschnitte für eine Kegelrolle aufweist, die diese zumindest teilweise beidseitig umfassen, und wobei das Käfigsegment für die an die beidseitig umfasste Kegelrolle angrenzenden Kegelrollen jeweils einen Führungsabschnitt aufweist, der im Zusammenwirken mit einem entsprechenden Führungsabschnitt der an das Käfigsegment angrenzenden Käfigsegmente die angrenzenden Kegelrollen zumindest teilweise beidseitig umfasst.

Mit dieser Ausgestaltung eines Käfigsegments wird erreicht, dass sich der durch diese Segmente gebildete Käfig dadurch auszeichnet, dass unter allen Lastbedingungen die Kegelrollen nicht aus ihrer optimalen Anlaufposition herausfallen können, so dass der Lauf des Lagers optimiert wird.

Eine erste Weiterbildung sieht vor, dass die beiden gegenüberliegenden Führungsabschnitte des Käfigsegments durch einen Boden miteinander verbunden sind, der eine Anlagefläche für die Stirnseite der Kegelrolle bildet.

Weiterhin kann jedes Käfigsegment im Bereich der Führungsabschnitte zwei sich in Umfangsrichtung des Lagers erstreckende Stege aufweisen, die eine Anlagefläche für die Stirnseite der Kegelrollen bilden. Hierbei ist insbesondere vorgesehen, dass die Stege zweier benachbarter Käfigsegmente eine gemeinsame Anlagefläche für die Stirnseite der Kegelrollen bilden.

Mit Vorteil ist die Breite bzw. die Dicke des Bodens und/oder des Steges geringfügig kleiner als die Differenz zwischen dem größten Durchmesser der Kegelrolle und der Länge der Kegelrolle.

Der Boden und/oder der Steg ist bevorzugt im Bereich des kleineren Durchmessers der Kegelrolle angeordnet.

Besonders bewährt hat es sich, wenn der Käfig und namentlich seine einzelnen Käfigsegmente aus Kunststoff hergestellt werden. Dies ermöglicht eine besonders effiziente und kostengünstige Herstellungsweise durch Spritzgießen.

In der Zeichnung ist ein Ausführungsbeispiel der Erfindung dargestellt. Es zeigen:
- Figur 1: in dreidimensionaler Ansicht den Ausschnitt eines Kreuzkegelrollenlagers,
- Figur 2: vier in Umfangsrichtung aufeinanderfolgende Einzelsegmente des Käfigs des Kreuzkegelrollenlagers in der Seitenansicht,
- Figur 3: ein einzelnes Käfigsegment des Käfigs des Kreuzkegelrollenlagers in perspektivischer Ansicht und
- Figur 4: einen Teil des Käfigs des Kreuzkegelrollenlagers mit eingesetzten Kegelrollen in perspektivischer Ansicht.

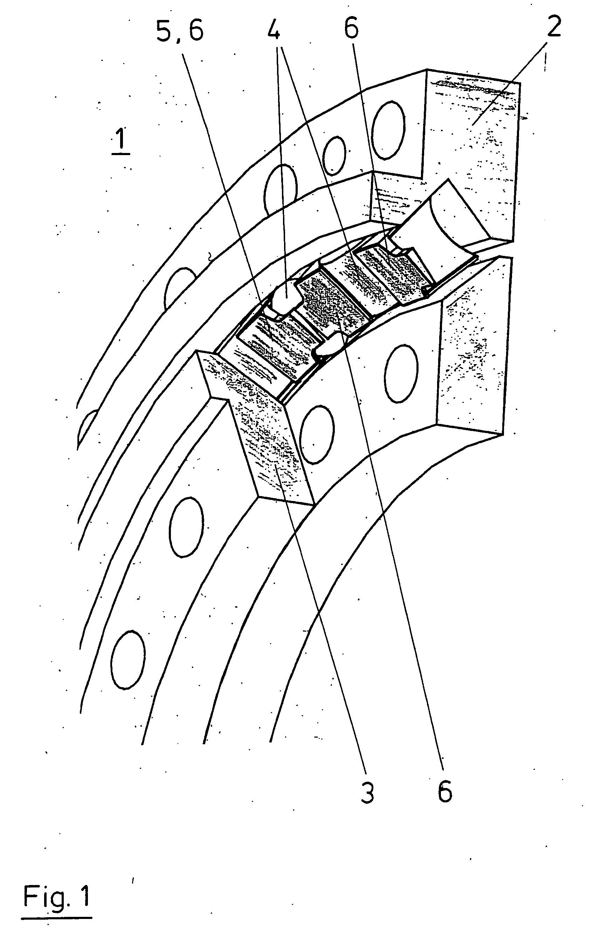

In Figur 1 ist ein Kreuzkegelrollenlager 1 zu sehen, das einen Außenring 2 und einen Innenring 3 aufweist. Zwischen Außenring 2 und Innenring 3 sind die Wälzkörper in Form von Kegelrollen 4 angeordnet. Das Lager 1 ist, wie gesagt, als Kreuzkegelrollenlager ausgebildet, was bedeutet, dass zwei in Umfangsrichtung aufeinanderfolgende Kegelrollen 4 jeweils um 90° zueinander verdreht angeordnet sind.

Die Führung der einzelnen Kegelrollen 4 wird durch einen Käfig 5 bewerkstelligt, der aus einzelnen Käfigsegmenten 6 besteht.

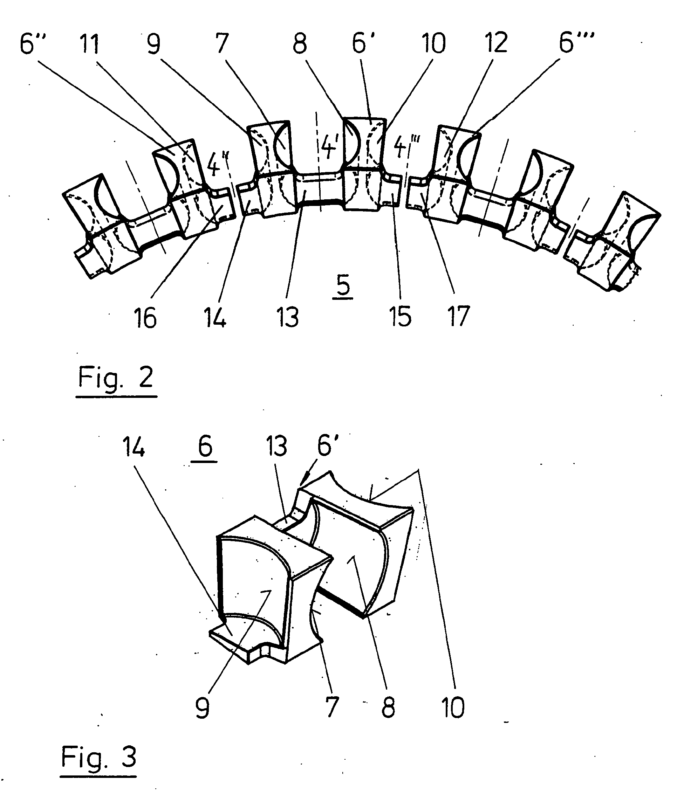

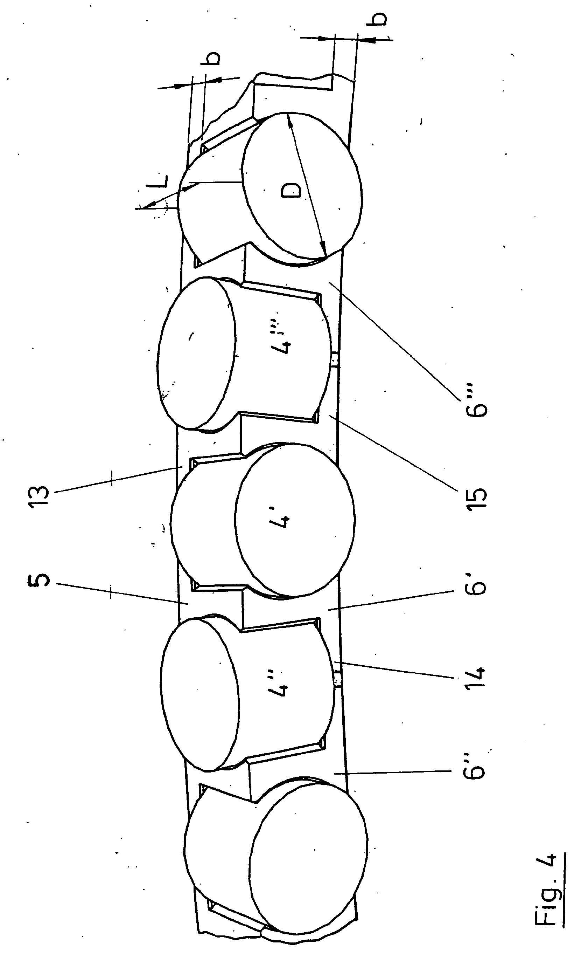

Der Aufbau der einzelnen Käfigsegmente 6, 6', 6", 6''' geht aus den Figuren 2 bis 4 hervor.

Jedes Käfigsegment 6, 6', 6", 6"' hat zwei gegenüberliegende Führungsabschnitte 7 und 8 für jeweils eine Kegelrolle 4. Wie besonders gut aus Figur 3 zu sehen ist, umfassen die Führungsabschnitte 7 und 8 eine (dort nicht dargestellte) Kegelrolle beidseitig, und zwar im Ausführungsbeispiel jeweils über einen Umfangsbereich von etwa 90°. Die Kegelrolle wird damit von den beiden Führungsabschnitten 7, 8 teilweise umfasst.

Weiterhin hat jedes Käfigsegment 6, 6', 6", 6''' für die an die beidseitig umfasste Kegelrolle 4' angrenzenden Kegelrollen 4", 4''' jeweils einen Führungsabschnitt 9 und 10, der im Zusammenwirken mit dem entsprechenden Führungsabschnitt 11, 12, der an das Käfigsegment 6' angrenzenden Käfigsegmente 6", 6''' die jeweils angrenzenden Kegelrollen 4", 4"' wiederum beidseitig umfassen (siehe Figur 2).

Die Verbindung der beiden Führungsabschnitte 7 und 8 des Käfigsegments 6' erfolgt durch einen Boden 13. Dessen Breite bzw. Dicke b ist geringfügig kleiner als die Differenz zwischen dem größten Durchmesser D der Kegelrolle 4 und ihrer Länge L. Hierdurch wird ein Halten der Kegelrolle 4 in ihrer optimalen Anlaufposition unter allen Lastumständen sichergestellt.

Hinsichtlich der Breite b der Stege 14, 15, 16 und 17 gilt Analoges, d.h. auch deren Breite b ist geringfügig kleiner als die Differenz zwischen Durchmesser D und Länge L der Kegelrolle 4.

Durch die vorgeschlagene Ausgestaltung ist sichergestellt, dass eine Kegelrolle jeweils beidseitig von einem Käfigsegment umschlossen gehalten wird. Die sich beidseitig anschließenden Kegelrollen werden jeweils nur einseitig von einem Käfigsegment umschlossen. Die durch die Führungsabschnitte gebildeten Rollentaschen sind einseitig offen. Im Bereich des kleinen Durchmessers der beidseitig umschlossenen Kegelrolle ist der Boden angeordnet, der die Kegelrolle hält. Für die von einem Käfigsegment nur einseitig umschlossene Kegelrolle ist der Steg vorgesehen, der im Zusammenwirken mit dem Steg des angrenzenden Käfigsegments eine sichere Führung der Kegelrolle bewerkstelligt.

In vorteilhafter Weise wird bereits bei der Lagermontage die Kegelrolle in ihrer optimalen Anlaufposition gehalten. Im Betrieb ist ein längeres Einrollen des Lagers, bis die Kegelrolle am entsprechenden Haltebord des Rings anliegt, nicht erforderlich. Vorteilhaft ist es ferner, dass es durch die vorgeschlagene Käfigstruktur ausgeschlossen ist, dass die Kegelrollen in falscher Lage montiert werden.

Die in Umfangsrichtung des Lagers gemessene Länge der Stege der einzelnen Käfigsegmente ist so gewählt, dass auch bei maximalem Endspiel der Käfigsegmente und maximaler Maßveränderung der Einzelteile des Lagers durch Erwärmung die Kegelrollen stets auf den Stegen aufliegen und folglich exakt positioniert bleiben.

### Bezugszeichenliste

- 1: Wälzlager (Kreuzkegelrollenlager)
- 2: Außenring
- 3: Innenring
- 4, 4', 4", 4''': Wälzkörper (Kegelrollen)
- 5: Käfig
- 6, 6', 6", 6''': Käfigsegment
- 7: Führungsabschnitt
- 8: Führungsabschnitt
- 9: Führungsabschnitt
- 10: Führungsabschnitt
- 11: Führungsabschnitt
- 12: Führungsabschnitt
- 13: Boden
- 14: Steg
- 15: Steg
- 16: Steg
- 17: Steg

- D: (größerer) Durchmesser der Kegelrolle
- L: Länge der Kegelrolle
- b: Breite (Dicke) des Bodens bzw. des Stegs

## Patentansprüche

1. Wälzlager (1), mit einem Außenring (2), einem Innenring (3) und zwischen diesen angeordneten Wälzkörpern (4),
wobei die Wälzkörper (4) durch einen Käfig (5) auf Abstand gehalten werden und
wobei der Käfig (5) aus einer Anzahl einzelner Käfigsegmente (6, 6', 6", 6''') gebildet wird,
**dadurch gekennzeichnet,**
**dass** das Wälzlager als Kreuzkegelrollenlager ausgebildet ist,
**dass** jedes Käfigsegment (6, 6', 6", 6''') zwei gegenüberliegende Führungsabschnitte (7, 8) für eine Kegelrolle (4') aufweist, die diese zumindest teilweise beidseitig umfassen, und
**dass** das Käfigsegment (6') für die an die beidseitig umfasste Kegelrolle (4') angrenzenden Kegelrollen (4", 4''') jeweils einen Führungsabschnitt (9, 10) aufweist, der im Zusammenwirken mit einem entsprechenden Führungsabschnitt (11, 12) der an das Käfigsegment (6') angrenzenden Käfigsegmente (6", 6''') die angrenzenden Kegelrollen (4", 4''') zumindest teilweise beidseitig umfassen.

2. Wälzlager nach Anspruch 1, **dadurch gekennzeichnet, dass** die beiden gegenüberliegenden Führungsabschnitte (7, 8) des Käfigsegments (6') durch einen Boden (13) miteinander verbunden sind, der eine Anlagefläche für die Stirnseite der Kegelrolle (4') bildet.

3. Wälzlager nach Anspruch 1 oder 2, **dadurch gekennzeichnet, dass** das Käfigsegment (6') im Bereich der Führungsabschnitte (9, 10) zwei sich in Umfangsrichtung des Lagers (1) erstreckende Stege (14, 15, 16, 17) aufweist, die eine Anlagefläche für die Stirnseite der Kegelrollen (4", 4''') bilden.

4. Wälzlager nach Anspruch 3, **dadurch gekennzeichnet, dass** die Stege (14, 16 bzw. 15, 17) zweier benachbarter Käfigsegmente (6', 6" bzw. 6', 6''') eine gemeinsame Anlagefläche für die Stirnseite der Kegelrollen (4", 4''') bilden.

5. Wälzlager nach einem der Ansprüche 2 bis 4, **dadurch gekennzeichnet, dass** die Breite bzw. Dicke (b) des Bodens (13) und/oder des Steges (14, 15, 16, 17) geringfügig kleiner ist als die Differenz zwischen dem größeren Durchmesser (D) der Kegelrolle (4) und der Länge (L) der Kegelrolle (4).

6. Wälzlager nach einem der Ansprüche 2 bis 5, **dadurch gekennzeichnet, dass** der Boden (13) und/oder der Steg (14, 15, 16, 17) im Bereich des kleineren Durchmessers der Kegelrolle (4) angeordnet ist.

7. Wälzlager nach einem der Ansprüche 1 bis 6, **dadurch gekennzeichnet, dass** die Käfigsegmente (6, 6', 6", 6''') aus Kunststoff bestehen.
